# EUROPÄISCHE PATENTANMELDUNG

(11) **EP 0 896 913 A2**
(43) Veröffentlichungstag der Anmeldung: **17.02.1999**
(21) Anmeldenummer: 98112707.9
(22) Anmeldetag: 09.07.1998
(51) Int. Cl.: B60S 1/04, B60S 1/24

(54) **Wischanlage**

(30) Priorität: 13.08.1997 DE 19735019
(71) Anmelder: Volkswagen Aktiengesellschaft, 38436 Wolfsburg (DE)
(72) Erfinder: Ostrowski, Wolfgang, 38446 Wolfsburg (DE)

(57) **Zusammenfassung**

Die Erfindung betrifft eine Wischvorrichtung, insbesondere für eine Kraftfahrzeugscheibe, mit einem Wischermotor 10 und einem in einem Abtriebsstrang 24, 26, 30, 32, 34, 38 des Wischermotor 10 angeordneten Zwischenlager 28. Dabei ist ein einstückiges Befestigungselement 16 vorgesehen, welches Befestigungsmittel 50, 52 für den Wischermotor 10 und das Zwischenlager 28 aufweist.

## Beschreibung

Die Erfindung betrifft eine Wischvorrichtung, insbesondere für eine Kraftfahrzeugscheibe, mit einem Wischermotor und einem in einem Abtriebsstrang des Wischermotor angeordneten Zwischenlager, gemäß dem Oberbegriff von Anspruch 1.

Eine gattungsgemäße Wischanlage ist beispielsweise aus der DE 33 42 860 A1 bekannt. Bei dieser Anordnung sind der Wischermotor und das Zwischenlager entweder an verschiedenen Karosserieteilen oder an einem aus mehreren, miteinander vercrimpten Teilen bestehenden Rahmenrohr befestigt. Dies hat jedoch den Nachteil, daß es aufgrund von fertigungsbedingten Toleranzen sowohl an den Karosserieteilen, als auch an den Teilen des Rahmenrohres zu entsprechenden Toleranzen bezüglich des Abstands zwischen Wischermotor und Zwischenlager kommt. Ein ungenau justierter Abstand zwischen Wischermotor und Zwischenlager und die zusätzlich ggf. zu einem Spiel führenden Toleranzen führen jedoch zu einem ungleichmäßigen Lauf der Wischanlage mit entsprechend höherem Verschleiß der bewegten Teile und Reduktion der Wischgüte bzw. der Wischqualität.

Der vorliegenden Erfindung liegt daher die Aufgabe zugrunde, eine verbesserte Wischanlage der obengenannten Art zur Verfügung zu stellen, wobei die obengenannten Nachteile überwunden werden und ein runder und verschleißarmer Lauf der Wischanlage gewährleistet ist.

Diese Aufgabe wird erfindungsgemäß durch eine Wischanlage der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß ein einstückiges Befestigungselement vorgesehen ist, welches Befestigungsmittel für den Wischermotor und das Zwischenlager aufweist.

Dies hat den Vorteil, daß durch die Befestigung von Wischermotor und Zwischenlager an einem einzigen Teil keine fertigungsbedingten Toleranzen mehr den Abstand zwischen Wischermotor und Zwischenlager beeinflussen und somit eine schnelle und kostengünstige Montage, ohne Nachjustierung des Abstands zwischen Wischermotor und Zwischenlager möglich ist, bei gleichbleibender oder erhöhter Wischqualität und verschleißarmen, verlustleistungsfreien und runden Lauf der bewegten Teile der Wischanlage.

In einer besonders kostengünstigen und gewichtsarmen Ausführungsform ist das Befestigungselement ein einstückiges Trägerblech.

Für eine weitere Erhöhung der Stabilität der Wischvorrichtung und zum zusätzlichen Vermeiden von Spiel und unrundem Lauf der Bewegten Teile ist in besonders bevorzugter Weise ein Rahmenrohr vorgesehen, welches sich zwischen Wischerwellen von Wischelementen erstreckt. Dabei ist es wegen einer guten Versteifung der Wischanlage besonders vorteilhaft, wenn das Befestigungselement mit dem Rahmenrohr fest verbunden ist.

Zweckmäßigerweise weist das Befestigungselement ein Befestigungsmittel zum Befestigen an einem Karosserieteil auf.

Für eine Befestigung von allen Lagern von bewegten Teilen der Wischvorrichtung mit entsprechend weiterer Reduktion von fertigungsbedingten Toleranzen sind am Befestigungselement zusätzlich Befestigungsmittel für Wischerwellen von Wischelementen vorgesehen.

Zweckmäßigerweise ist das Zwischenlager ein Dreigelenk ist, wobei ein karrosseriefestes Gelenk fest mit dem Befestigungselement verbunden.

In einer besonders bevorzugten Ausführungsform umfaßt der Wischermotor eine Drehscheibe mit exzentrischem Lager, wobei sich von dem exzentrischem Lager zwei Schubstangen in entgegengesetzte Richtungen erstrecken, wobei vorzugsweise ferner eine erste Schubstange mit einer ersten Schwinge an einer ersten Wischerwelle eines ersten Wischelementes, eine zweite Schubstange mit einem ersten Gelenk des Zwischenlagers und eine dritte Schubstange mit einem dritten Gelenk des Zwischenlagers und mit einer zweiten Schwinge an einer zweiten Wischerwelle eines zweiten Wischelementes verbunden ist.

Zweckmäßigerweise ist die Kraftfahrzeugscheibe eine Windschutzscheibe oder eine Heckscheibe.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Wischanlage in einer Ansicht von vorne und
- Fig. 2: einen Teil der Wischanlage von Figur 1 in einer vergrößerten Rückansicht.

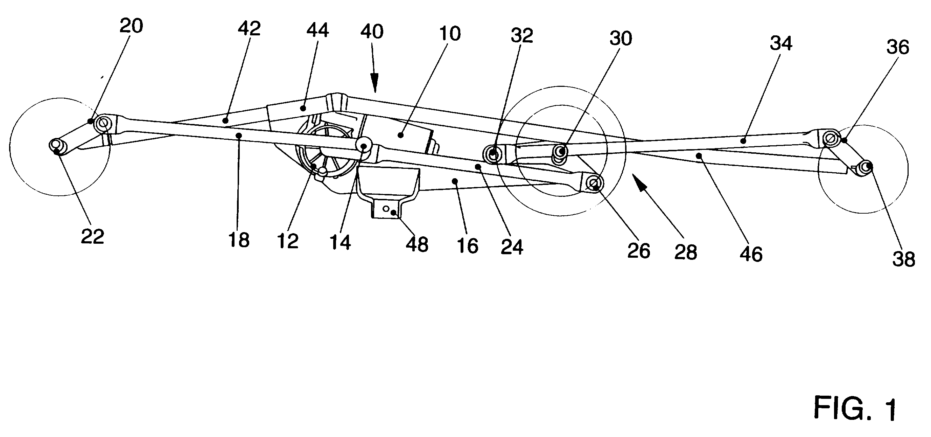

Die in Figur 1 dargestellte bevorzugte Ausführungsform einer erfindungsgemäßen Wischanlage umfaßt einen Wischermotor 10 mit einer Drehscheibe 12 und einem auf der Drehscheibe 12 exzentrisch angeordneten Lagerzapfen 14. Der Wischermotor 10 ist auf einem Befestigungselement 16 fixiert. An dem Lagerzapfen 14 ist eine erste Schubstange 18 angelenkt, welches sich in der Figur 1 nach links erstreckt und an einer ersten Schwinge 20 an einer ersten Wischerwelle 22 angelenkt ist. An der ersten Wischerwelle 22 befindet sich ein nicht dargestelltes Wischelement.

Mit dem Lagerzapfen 14 ist ferner eine zweite Schubstange 24 gelenkig verbunden, welche sich bezüglich der ersten Schubstange 18 in eine entgegengesetzte Richtung erstreckt und an einem ersten Gelenk 26 eines Zwischenlagers 28 angelenkt ist. Das Zwischenlager 28 ist mit einem zweiten Gelenk 30 an dem einstückigen Befestigungselement 16 fixiert und an einem dritten Gelenk 32 des Zwischenlagers 28 ist eine dritte Schubstange 34 angelenkt, welche ferner mit einer zweiten Schwinge 36 einer zweiten Wischerwelle 38 verbunden ist. An der zweiten Wischerwelle 38 ist ein nicht dargestelltes Wischelement angeordnet.

Ein Rahmenrohr 40 erstreckt sich zwischen den beiden Wischerwellen 22 und 38 und besteht aus drei Teilen 42, 44 und 46, welche miteinander vercrimpt das Rahmenrohr 40 ausbilden.

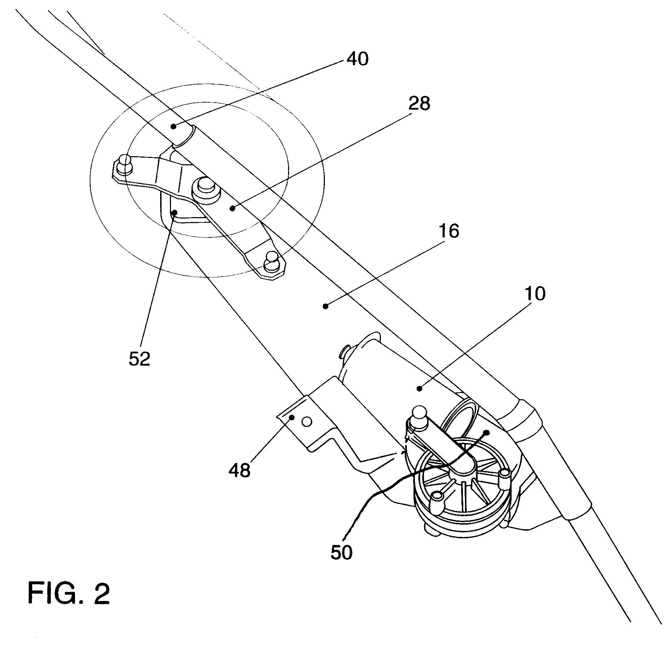

Wie sich insbesondere aus Figur 2 ergibt, ist das Befestigungselement 16 einstückig ausgebildet und trägt sowohl den Wischermotor 10 als auch das Zwischenlager 28. Ferner umfaßt das Befestigungselement 16 eine Befestigungsvorrichtung 48 zum Befestigen desselben an einem nicht dargestellten Karosserieteil. Das Befestigungselement 16 ist zusätzlich an dem Rahmenrohr 40 befestigt.

Dadurch, daß das Befestigungselement 16 einstückig ausgebildet ist, entfallen Einflüsse von fertigungsbedingten Toleranzen auf den Abstand zwischen Wischermotor 10 und Zwischenlager 28. Dadurch läuft die Wischanordnung runder und mit weniger Verschleiß an Lager und Gestänge. Ferner entfallen Verlustleistungen am Wischermotor aufgrund eines fehlerhaft justierten Abstands zwischen Wischermotor 10 und Zwischenlager 28. Bei der Montage sind durch Befestigungsmittel 50 und 52 auf dem Befestigungselement 16 jeweils für Wischermotor 10 und Zwischenlager 28 feste Positionen vorgegeben und Fehljustierungen ausgeschlossen Ferner entfällt ein kostenintensives nachjustieren eines Abstandes zwischen diesen Teilen 10 und 28 völlig.

In einer vorteilhaften Weiterbildung der Erfindung wird auf das Rahmenrohr 40 verzichtet und statt dessen das Befestigungselement 16 derart groß ausgebildet, daß es sich zwischen den Wischerwellen 22 und 38 erstreckt und auch diese aufnimmt. Hierdurch ergibt sich in vorteilhafter Weise eine zusätzliche Justierung von Wischermotor 10 und Zwischenlager 28 auch bezüglich der Wischerwellen 22 und 38, sowie eine zusätzliche Gesamtversteifung der Wischanordnung.

### BEZUGSZEICHENLISTE

- 10: Wischermotor
- 12: Drehscheibe
- 14: Lagerzapfen
- 16: Befestigungselement
- 18: erste Schubstange
- 20: erste Schwinge
- 22: erste Wischerwelle
- 24: zweite Schubstange
- 26: erstes Gelenk
- 28: Zwischenlager
- 30: zweites Gelenk
- 32: drittes Gelenk
- 34: dritte Schubstange
- 36: zweite Schwinge
- 38: zweite Wischerwelle
- 40: Rahmenrohr
- 42: Teil von Rahmenrohr
- 44: Teil von Rahmenrohr
- 46: Teil von Rahmenrohr
- 48: Befestigungsvorrichtung
- 50: Befestigungsmittel für Wischermotor
- 52: Befestigungsmittel für Zwischenlager

## Patentansprüche

1. Wischvorrichtung, insbesondere für eine Kraftfahrzeugscheibe, mit einem Wischermotor (10) und einem in einem Abtriebsstrang (24,26,30,32,34,38) des Wischermotor (10) angeordneten Zwischenlager (28),
dadurch gekennzeichnet, daß
ein einstückiges Befestigungselement (16) vorgesehen ist, welches Befestigungsmittel (50,52) für den Wischermotor (10) und das Zwischenlager (28) aufweist.

2. Wischvorrichtung nach Anspruch 1,
dadurch gekennzeichnet, daß
das Befestigungselement (16) ein einstückiges Trägerblech ist.

3. Wischvorrichtung nach Anspruch 1 oder 2,
dadurch gekennzeichnet, daß
ferner ein Rahmenrohr (40) vorgesehen ist, welches sich zwischen Wischerwellen (22,38) von Wischelementen erstreckt.

4. Wischvorrichtung nach Anspruch 3,
dadurch gekennzeichnet, daß
das Befestigungselement (16) mit dem Rahmenrohr (40) fest verbunden ist.

5. Wischvorrichtung nach einem der vorhergehenden Ansprüche,
dadurch gekennzeichnet, daß
das Befestigungselement (16) ein Befestigungsmittel (48) zum Befestigen an einem Karosserieteil aufweist.

6. Wischvorrichtung nach einem der vorhergehenden Ansprüche,
dadurch gekennzeichnet, daß
am Befestigungselement (16) zusätzlich Befestigungsmittel für Wischerwellen (22,38) von Wischelementen vorgesehen sind.

7. Wischvorrichtung nach einem der vorhergehenden Ansprüche,
dadurch gekennzeichnet, daß
das Zwischenlager (28) ein Dreigelenk ist, wobei ein karrosseriefestes Gelenk (30) fest mit dem Befestigungselement (16) verbunden ist.

8. Wischvorrichtung nach einem der vorhergehenden Ansprüche,
dadurch gekennzeichnet, daß
der Wischermotor (10) eine Drehscheibe (12) mit exzentrischem Lagerzapfen (14) aufweist, wobei sich von dem exzentrischem Lagerzapfen (14) zwei Schubstangen (18,24) in entgegengesetzte Richtungen erstrecken.

9. Wischvorrichtung nach Anspruch 8,
dadurch gekennzeichnet, daß
eine erste Schubstange (18) mit einer ersten Schwinge (20) an einer ersten Wischerwelle (22) eines ersten Wischelementes verbunden ist

10. Wischvorrichtung nach Anspruch 8 oder 9,
dadurch gekennzeichnet, daß
eine zweite Schubstange (24) mit einem ersten Gelenk (26) des Zwischenlagers (28) verbunden ist.

11. Wischvorrichtung nach einem der Ansprüche 8 bis 10,
dadurch gekennzeichnet, daß
eine dritte Schubstange (34) mit einem dritten Gelenk (32) des Zwischenlagers (28) und mit einer zweiten Schwinge (36) an einer zweiten Wischerwelle (38) eines zweiten Wischelementes verbunden ist.

12. Wischvorrichtung nach einem der vorhergehenden Ansprüche,
dadurch gekennzeichnet, daß
die Kraftfahrzeugscheibe eine Windschutzscheibe oder eine Heckscheibe ist.
